# EUROPÄISCHE PATENTSCHRIFT

(11) **EP 2 135 125 B1**
(45) Veröffentlichungstag und Bekanntmachung des Hinweises auf die Patenterteilung: **02.05.2012**
(21) Anmeldenummer: 07801418.0
(22) Anmeldetag: 04.07.2007
(51) Int. Cl.: G02B 7/02, G02B 15/14, F16C 29/04

(54) **OPTIKBAUEINHEIT MIT EINER WÄLZLAGERLINEARFÜHRUNG UND EINEM MOTORISCHEN ANTRIEB**
OPTICAL ASSEMBLY WITH A ROLLER BEARING LINEAR GUIDE AND A MOTORIZED DRIVE
MODULE OPTIQUE PRÉSENTANT UN GUIDE LINÉAIRE À ROULEAUX ET UN ENTRAÎNEMENT À MOTEUR

(30) Priorität: 13.03.2007 DE 102007012589
(43) Veröffentlichungstag der Anmeldung: 23.12.2009
(73) Patentinhaber: Schwab, Martin, 91729 Obererlbach (DE)
(72) Erfinder: Schwab, Martin, 91729 Obererlbach (DE)
(74) Vertreter: Blaumeier, Jörg
(86) Internationale Anmeldenummer: PCT/EP2007/005914
(87) Internationale Veröffentlichungsnummer: WO 2008/110189

(56) Entgegenhaltungen:
- WO-A-2006/109587
- DE-A1- 2 449 719
- DE-A1- 2 844 773
- JP-A- 8 029 656
- JP-A- 8 086 948
- US-A- 3 971 599
- US-A1- 2006 187 562

## Beschreibung

Die Erfindung betrifft eine kleinbauende Optikeinheit, insbesondere für eine Mobiltelefonkamera, bestehend aus wenigstens einer optischen Komponente, insbesondere einem Linsenträger, einem Stator und wenigstens drei Wälzkörpern, wobei die optische Komponente, insbesondere der Linsenträger am Stator über eine Wälzlagerlinearführung mit am Stator ausgebildeten Wälzkörperführungsbahnen gelagert ist, wobei im Bereich der Wälzlagerlinearführung ein motorisches Stellelement an der optischen Komponente, insbesondere dem Linsenträger angreift, so dass die optische Komponente, insbesondere der Linsenträger längs einer vertikal auf einer Bildaufnahmeebene des Bildaufnahmemittels stehenden Achse relativ zum Stator bewegbar ist.

In der Fotografie oder bei Filmaufnahmen ist die Abbüdungsquelität insbesondere von zwei Faktoren abhängig. Zum einen von der genauen Positionierung der Fokusebene auf die Bildebene der bilderfassenden Elemente (z. B. Film oder Digitalsensor) entlang der optischen Achse. Zum anderen soll die Fokalebene möglichst planparallel zur Ebene der Bilderfassung liegen. Die notwendigen Genauigkeiten sind umso höher, je kleiner die Büderfassungsbereiche werden. Für einen modernen Digitalsensor liegt die zulässige Abweichung im Bereich von nur wenigen Mikrometer.

Vor allem bei sehr klein bauenden Optiken bzw. Kameraanordnungen, insbesondere bei Mobiltelefonkameras, ergeben sich beachtliche Probleme, wenn eine Verstellbarkeit der Optikbaueinheit realisiert werden soll.

Aus WO 2006/109587 A1 ist eine Optikbaueinheit der eingangs genannten Art bekannt. Diese aus einer Vielzahl einzelner Teile bestehende Optikbaueinheit weist zur Führung der beweglichen Komponenten jeweils mehrere radial ausgerichtete Wälzlagerlinearführungen auf, die über separate Bauteile, die an den relativ zueinander beweglichen Komponenten anzuordnen sind, realisiert sind.

Eine weitere Optikbaueinheit ist aus JP 08 029656 A bekannt. Auch dort kommen radial ausgerichtete Wälzlagerlinearführungen zur Bewegungslagerung der beweglichen Komponenten zum Einsatz.

Der Erfindung liegt damit das Problem zugrunde, eine Optikbaueinheit anzugeben, die möglichst klein gestaltet werden kann und eine hochgenaue Positionierung der beweglichen Komponenten bezüglich eines Bild erfassenden Elements zulässt.

Zur Lösung dieses Problems ist bei einer Optikbaueinheit der eingangs genannten Art vorgesehen, dass an der optischen Komponente, Insbesondere dem Linsenträger ein seitlicher Ansatz vorgesehen ist, an dem seitlich einander gegenüberliegend zwei Führungsbahnen ausgebildet sind, wobei der Ansatz in einen am Stator vorhandenen Aufnahmeraum mit zwei einander gegenüberliegenden Führungsbahnen eingreift, und wobei sich die einander gegenüberliegenden Führungsbahnen des Ansatzes und des Aufnahmeraums zu zwei Führungskanälen, in denen die Wälzkörper aufgenommen sind, ergänzen, und wobei die optische Komponente, insbesondere der Linsenträger über die wenigstens drei Wälzkörper geführt ist.

Die Erfindung verbessert die Führung und Positionierung von Linsen oder Objektiven oder optischen Einzelkomponenten im Strahlengang einer optischen Baugruppe und ermöglicht es, sehr kleinbauende Optiken zu realisieren, die sich auch bei sehr geringem Platzangebot integrieren lassen, z. B. Optiken für Mobiltelefonkameras. Die Erfindung löst in hohem Maß den geforderten Anspruch auf Genauigkeit. Die einfache Fertigung, die Möglichkeit, die Bauteile sehr klein zu gestalten und die hochgenaue, wenn notwendige spielfreie Positionierung sind Vorteile der Erfindung.

Erfindungsgemäß vorgesehen ist eine Wälzkörperlagerung der optischen Komponente, insbesondere in Form eines Linsenträgers am Stator, wobei der Linsenträger eine optische Linse aufweisen kann, aber auch andere optische Komponenten wie eine Blende, einen Shutter oder dergleichen an einem geeigneten Träger angeordnet sein können bzw. einen solchen umfassen, oder die am Linsenträger selbst angeordnet werden können. Über ein motorisches Stellelement, das im Bereich der Linearführung, also unmittelbar an der mechanischen Führung selbst, angreift, ist eine exakte Positionierung längs der Bewegungsachse möglich. Die Wälzkörperlagerung ermöglicht eine spielfreie und exakte Lagerung der beweglichen Bauteile zueinander, die während der Bewegung eine definierte Relativlage zueinander aufweisen, eine Bewegung ist lediglich längs der ausgezeichneten Bewegungsachse möglich, so dass sichergestellt ist, dass die zentrale optische Randbedingung, nämlich die Planparallelheit der Fokalebene zur Bilderfassungsebene, stets erfüllt ist.

Gemäß der Erfindung ist an der optischen Komponente, insbesondere am Linsenträger ein seitlicher Ansatz vorgesehen, an dem seitlich einander gegenüberliegend zwei Führungsbahnen ausgebildet sind, welcher Ansatz in einen am Stator vorgesehenen und zwei einander gegenüberliegende Führungsbahnen aufweisenden Aufnahmeraum eingreift, wobei sich die einander gegenüberliegenden Führungsbahnen des Ansatzes und des Aufnahmeraums zu zwei Führungskanälen ergänzen. Die Lagerung ist also eine doppelseitige Lagerung über zwei Führungskanäle, was auf einfache Weise dadurch realisiert wird, dass am Linsenträger, der beispielsweise ein ringförmiges oder hohlzylindrisches Bauteil ist, ein seitlicher Ansatz vorgesehen ist, an dessen Außenseite, einander exakt gegenüberliegend, zwei Komponenten- bzw. Linsenträger-Führungsbahnen vorgesehen sind, während am vorzugsweise hohlzylindrischen Stator ein Aufnahmeraum vorgesehen ist, beispielsweise in Form einer Durchbrechung, wobei im Aufnahmeraum zwei Statorführungsbahnen vorgesehen sind und sich so bei eingesetztem Ansatz zwei Führungskanäle ergeben, in denen die Wälzkörper laufen. Die Geometrie der Führungsbahnen und damit der Führungskanäle ist selbstverständlich auf die Geometrie der Wälzkörper abgestimmt. Es können Kugeln, Rollen oder Nadeln verwendet werden.

Die Wälzkörper selbst können unter Vorspannung aufgenommen sein, so dass sich insgesamt eine vollkommen spielfreie Lagerung ergibt. Dies kann dadurch realisiert sein, dass die Führungsbahnen des Stators federnd ausgebildet sein können, was konstruktiv auf einfache Weise dadurch realisiert werden kann, dass die Führungsbahnen an am Stator federnd ausgebildeten Abschnitten vorgesehen sind. An diesen federnden Abschnitten ist also der Aufnahmeraum vorgesehen, der bei dieser Ausgestaltung bevorzugt als Durchbrechung ausgebildet ist, so dass eine gewisse Federbarkeit der Abschnitte, die bevorzugt über einen schmalen Spalt vom Statorboden zur Ermöglichung der Federbarkeit beabstandet sind, realisiert werden kann.

Weiterhin ist vorgesehen, dass die optische Komponente, insbesondere der Linsenträger über wenigstens drei Wälzkörper, wobei in einem Führungskanal zwei Wälzkörper und im anderen Führungskanal ein Wälzkörper vorgesehen ist, geführt ist. Hierüber ergibt sich eine in Achsrichtung gesehen ausreichende Linearlagerung, die eine exakte Relativbewegung, insbesondere in Verbindung mit einer gegebenen Vorspannung im Linearlager, ermöglicht. Denkbar sind aber auch z. B. vier Wälzkörper, also je zwei pro Führungskanal.

Für eine Bewegung der optischen Komponente, insbesondere des Linsenträgers relativ zum Stator ist in bevorzugter Erfindungsausgestaltung an einem oder dem an der optischen Komponente, insbesondere am Linsenträger vorgesehenen seitlichen Ansatz ein Verzahnungsabschnitt vorgesehen, mit dem ein Ritzel des motorischen Stellelements klemmt. Bevorzugt ist der die Führungsbahnen aufweisende Ansatz mit dem Verzahnungsabschnitt versehen, denkbar ist es aber auch, hierzu einen separaten Ansatz vorzusehen. Am motorischen Stellelement, einem miniaturisierten Motor, der lagefest am Stator angeordnet ist, ist ein entsprechendes Ritzel vorgesehen, das mit dem Verzahnungsabschnitt kämmt. Über eine geeignete Steuerungseinrichtung, die beispielsweise im Mobiltelefon integriert und Teil der dortigen Kameraeinrichtung ist, wird das Stellelement entsprechend angesteuert, um die gewünschte Optikverstellung zu realisieren. Denkbar ist auch der Einsatz eines elektromechanischen Motors wie eines Piezomotors, der über an der optischen Komponente, insbesondere dem Linsenträger an einem dort ausgebildeten Angriffsabschnitt mit einem piezoelektrisch bewegten Stellglied angreift.

Die einfachste Erfindungsausgestaltung umfasst nur eine optische Komponente, insbesondere nur einen Linsenträger und einen Stator, das heißt, ein optisches Element wie eine Linse ist relativ zu dem bilderfassenden Element, das am Stator angeordnet ist, z. B. einem Digitalsensor, verstellbar Nach einer besonders zweckmäßigen Erfindungsausgestaltung sind zwei oder mehr optische Komponenten, insbesondere Linsenträger und ein gemeinsamer Stator vorgesehen. Die Erfindungsalternative sieht zwei oder mehr Komponenten, vorzugsweise Linsenträger vor, die einem gemeinsamen Stator zugeordnet sind und relativ zu diesem beweglich sind. Hierdurch lassen sich unterschiedlichste Optiken mit verschiedenen optischen Eigenschaften realisieren.

Dabei kann jede optische Komponente, insbesondere jeder Linsenträger über ein eigenes motorisches Stellelement separat relativ zum Stator bewegbar sein. Nach dieser Erfindungsalternative ist also z.B. jeder einzelne Linsenträger über eine eigene Wälzlagerung am Stator gelagert, jeder Linsenträger ist über einen eigenen Verzahnungsabschnitt und ein eigenes motorisches Stellelement separat relativ zum Stator verstellbar. Eine Alternative sieht vor, dass zumindest ein Teil der optischen Komponenten, insbesondere der Linsenträger (oder alle) miteinander bewegungsgekoppelt und über ein gemeinsames motorisches Stellelement bewegbar ist, während die andere(n) optische(n) Komponente(n), insbesondere der oder die anderen Linsenträger über gegebenenfalls jeweils ein eigenes motorisches Stellelement relativ zum Stator bewegbar ist. Bei dieser Erfindungsausgestaltung werden also beispielsweise zwei oder mehr bewegungsgekoppelte, also in einer festen Lagebeziehung zueinander stehende Komponenten und deren Träger oder die Linsenträger gemeinsam über ein gemeinsames motorisches Stellelement bewegt. Diese beispielsweise als Linsenträgerbaugruppe ausgebildete Einheit hat nur einen einzigen Verzahnungsabschnitt sowie einen einzigen Abschnitt, über den diese bewegungsgekoppelte Baugruppe über eine geeignete Wälzkörper-Linearführung am Stator gelagert ist. Der oder die nicht bewegungsgekoppelten Linsenträger oder eine andere optische Komponente sind bzw. ist separat über eigene Wälzkörper-Linearführungen am Stator gelagert und über separate Verzahnungsabschnitte am jeweiligen Ansatz und eigene motorische Stellelemente bewegbar.

Ausgehend von diesen unterschiedlichen Basisausgestaltungen sind unterschiedlich aufgebaute Optikbaueinheiten denkbar. Nach einer ersten Erfindungsalternative sind zwei oder mehr optische Komponenten, z.B. Linsenträger vorgesehen, deren Ansätze übereinander liegen und in einen gemeinsamen Aufnahmeraum eingreifen. Jede dieser Komponenten, also jeder Linsenträger ist separat bewegbar, ihm ist also ein separates motorisches Stellelement zugeordnet, das mit jeweils einem komponententräger- oder linsenträgereigenen Verzahnungsabschnitt kämmt. Die Komponenten bzw. Linsenträger liegen übereinander, ihre Ansätze greifen in einen gemeinsamen statorseitig vorgesehenen Aufnahmeraum, in diesem Bereich ist die Wälzkörper-Linearführung jeder einzelnen Komponente oder jedes einzelnen Linsenträgers realisiert.

Alternativ hierzu können zwei oder mehr optische Komponenten oder Linsenträger vorgesehen sein, wobei die Ansätze der übereinander angeordneten Komponenten oder Linsenträger um einen Winkel verdreht zueinander, vorzugsweise abwechselnd zur einen und um 180° gedreht zur anderen Seite ausgerichtet sind, wobei der Lage der Ansätze entsprechend versetzt, vorzugsweise an einander gegenüberliegenden Seiten des Stators Aufnahmeräume für die jeweiligen Ansätze vorgesehen sind. Es sind also alle Ansätze der mehreren Komponenten, insbesondere der Linsenträger nicht an einer gemeinsamen Seite vorgesehen, sondern abwechselnd an der einen und der anderen Seite, wobei bei dieser Ausgestaltung zwei statorseitige Aufnahmeräume vorgesehen sein müssen. Sind bei dieser Erfindungsausgestaltung z.B. drei Linsenträger vorgesehen, so können die Ansätze des unteren und des oberen Linsenträgers übereinander liegen und in einen gemeinsamen Aufnahmeraum eingreifen, während der Ansatz des mittleren Linsenträgers an der gegenüberliegenden Seite angeordnet ist und in einen an der gegenüberliegenden Statorseite vorgesehenen Aufnahmeraum eingreift. Der mittlere Linsenträger ist also um 180° gedreht, insgesamt sind drei motorische Stellantriebe vorgesehen, nachdem auch hier jeder Linsenträger separat verstellbar ist. Anstelle einer Verdrehung um 180° ist auch jeder andere Winkelversatz, z.B. um 120°, um 90° oder um 60° denkbar.

Eine Erfindungsalternative sieht drei oder mehr optische Komponenten, insbesondere Linsenträger vor, wobei lediglich die untere erste und die folgende zweite Komponente, insbesondere der entsprechende Linsenträger einen Ansatz aufweisen, welche Ansätze um einen Winkel, vorzugsweise um 180° verdreht zueinander positioniert und in entsprechenden Aufnahmeräumen des Stators angeordnet sind, und wobei die dritte und gegebenenfalls folgende Komponente, insbesondere der entsprechende Linsenträger mit der unteren ersten oder der folgenden zweiten Komponente, insbesondere dem entsprechenden Linsenträger über einen Verbindungsarm bewegungsgekoppelt ist. Nach dieser Erfindungsausgestaltung weisen z.B. nur zwei Linsenträger der mehreren Linsenträger oder sonstigen optischen Komponenten einen Ansatz auf, wobei diese Ansätze vorzugsweise um 180° verdreht zueinander angeordnet sind. In entsprechender Weise sind am Stator zwei um den gleichen Winkelversatz, also vorzugsweise 180° versetzte Aufnahmeräume zur Realisierung der Wälzkörper-Linearführungen vorgesehen. Weitere optische Komponenten wie z.B. Linsenträger sind mit der ersten oder der zweiten Komponente, insbesondere dem entsprechenden Linsenträger, die wie beschrieben wälzkörpergelagert am Stator angeordnet sind, über einen Verbindungsarm bewegungsgekoppelt. Hier können also Komponenten- oder Linsenträgergruppen, die in fester Lagebeziehung über den Verbindungsarm stehen, gemeinsam über einen Motor bewegt werden, wobei hier zwangsläufig zwei separate Stellmotoren zum Einsatz kommen. Bei z.B. vier Linsenträgern können zwei Linsenträgergruppen gebildet werden. Auch hier können anstelle einer Verdrehung um 180° ist auch andere Winkelversätze, z.B. um 120°, um 90° oder um 60° realisiert werden.

Wie beschrieben können unterschiedliche optische Komponenten verbaut werden. Eine zentrale Komponente ist ein Linsenträger, an dem eine Lines angeordnet ist, die über den Linsenträger bewegt werden kann. Denkbar ist aber auch, als optische Komponente einen Verschluss, über den die Belichtung des Bildaufnahmechips gesteuert wird, und/oder eine Blende vorzusehen, die z.B. an geeigneten eigenen Trägern angeordnet werden. Über diese Träger kann eine solche Komponente separat bewegt werden, wozu ein solcher Träger wie ein Linsenträger einen entsprechenden Verzahnungs- oder sonstigen der Art des verwendeten Stellantriebs entsprechenden Bewegungskopplungsabschnitt aufweist. Ein Verschluss und eine Blende können auch in einem gemeinsamen Bauteil integriert sein, so dass nur ein Bauteil zu bewegen ist. Anstelle de Verwendung eines eigenen Komponententrägers und damit einer eigenen Bewegbarkeit der Komponente relativ zu anderen Komponenten ist es auch denkbar, dass die Komponente, also z.B. der Verschluss oder die Blende oder das beide enthaltende Bauteil, an einem Linsenträger samt Linse angeordnet ist. Dies ist vorteilhaft, um etwaige aus einem zu großen Abstand von z.B. Verschluss/Blende zur Linse resultierende Abbildungsfehler zu vermeiden. Hier wird also der Verschluss oder die Blende gemeinsam mit der Linse bewegt.

Zweckmäßigerweise werden, sofern mehrere motorische Stellelemente zum Einsatz kommen, diese über eine gemeinsame Steuerungseinrichtung, z.B. die eines Mobiltelefons, angesteuert.

Weiterhin können am Stator ein oder mehrere Befestigungselemente zum Befestigen der Optikbaueinheit an einen Drittgegenstand vorgesehen sein. Bei diesen Befestigungselementen kann es sich um Schraubverbindungen oder Schnapp-Rast-Verbindungen handeln. Bevorzugt werden solche Befestigungselemente, die eine einfache Verbaubarkeit, insbesondere eine automatisierte Verbauung der Optikbaueinheit an dem Drittgegenstand, vorzugsweise ein Mobiltelefon, ermöglichen. Denkbar ist auch, als Befestigungselement eine Klebefläche vorzusehen, über die der Stator und damit die ganze Optikbaueinheit an dem Drittgegenstand verklebt werden kann.

Eine Weiterbildung sieht ein mit einer externen Steuerungseinrichtung, vorzugsweise der eines Mobiltelefons, verbindbares flexibles Leiterplattenband (sog. Flexband) vor, mit dem das Bildaufnahmemittel und das oder die motorischen Stellelemente und gegebenenfalls eine anzusteuernde optische Komponente wie ein Verschluss oder eine Blende, die zu bewegende Teile enthalten, verbunden sind. Es kommt also ein einfach zu verarbeitendes Leitband zum Einsatz, das alle dem Betrieb und der Steuerung der Bildaufnahmeeinheit dienenden Verbindungsleitungen aufweist und so den Steuerzugriff über eine externe Steuerungseinrichtung auf die Optikbaueinheit erlaubt.

Über ein metallenes Gehäuse ist die Optikbaueinheit nach Außen gekapselt und gegen äußere Einflüsse geschützt.

Weiterhin betrifft die Efindung ein Mobiltelefon, umfassend eine Optikbaueinheit der beschriebenen Art.

Weitere Vorteile, Merkmale und Einzelheiten der Erfindung ergeben sich aus den im folgenden beschriebenen Ausführungsbeispielen sowie anhand der Zeichnung. Dabei zeigen:
- Fig. 1: eine Perspektivansicht eines Linsenträgers,
- Fig. 2: eine gedrehte Ansicht des Linsenträges aus Fig. 1,
- Fig. 3: eine Perspektivansicht eines Stators,
- Fig. 4: eine Ansicht einer Optikbaueinheit einer ersten Ausführungsform aus dem Linsenträger aus Fig. 1 und 2 und dem Stator aus Fig. 3,
- Fig. 5: eine Seitenansicht der Optikbaueinheit aus Fig. 4,
- Fig. 6: eine Aufsicht auf die Optikbaueinheit aus Fig. 4,
- Fig. 7: eine Schnittansicht in Richtung der Linie E-E in Fig. 6 und eine vergrößerte Darstellung der Linearführung,
- Fig. 8: eine gedrehte Perspektivdarstellung der Optikbaueinheit aus Fig. 4,
- Fig. 9: eine Darstellung einerzweiten erfindungsgemäßen Ausführungsform einer Optikbaueinheit mit zwei Linsengruppen, die unabhängig voneinander durch zwei Motoren bewegt werden können
- Fig. 10: einen Längsschnittansicht durch die Optikbaueinheit aus Fig. 9,
- Fig. 11: eine dritte Ausführungsform einer Optikbaueinheit mit drei Linsengruppen, die unabhängig voneinander durch drei Motoren bewegt werden können,
- Fig. 12: die Optikbaueinheit aus Fig. 11 in gedrehter Ansicht,
- Fig. 13: eine vierte Ausführungsform, in der zwei Linsenträger bewegungsgekoppelt sind und gleichzeitig bewegt werden, während ein weiterer Linsenträger dazwischen unabhängig bewegt wird,
- Fig. 14: die Optikbaueinheit aus Fig. 13 in einer gedrehten Ansicht,
- Fig. 15: die Optikbaueinheit aus Fig. 13 in einer Ansicht von unten,
- Fig. 16: die Optikbaueinheit aus Fig. 13 in einer Seitenansicht,
- Fig. 17 - 20: eine Ausführungsform einer weiteren erfindungsgemäßen Optikeinheit in vier verschiedenen perspektivischen Seitenansichten,
- Fig. 21: eine Schnittansicht durch eine fertige, gehäuste Optikeinheit,
- Fig. 22: die Optikeinheit aus Fig. 21 in einer perspektivischen Seitenansicht,
- Fig. 23: ein erfindungsgemäßes Mobiltelefon mit einer erfindungsgemäßen Optikbaueinheit, und
- Fig. 24: eine vergrößerte Seitenansicht im Schnitt des Mobiltelefons samt Optikbaueinheit aus Fig. 23.

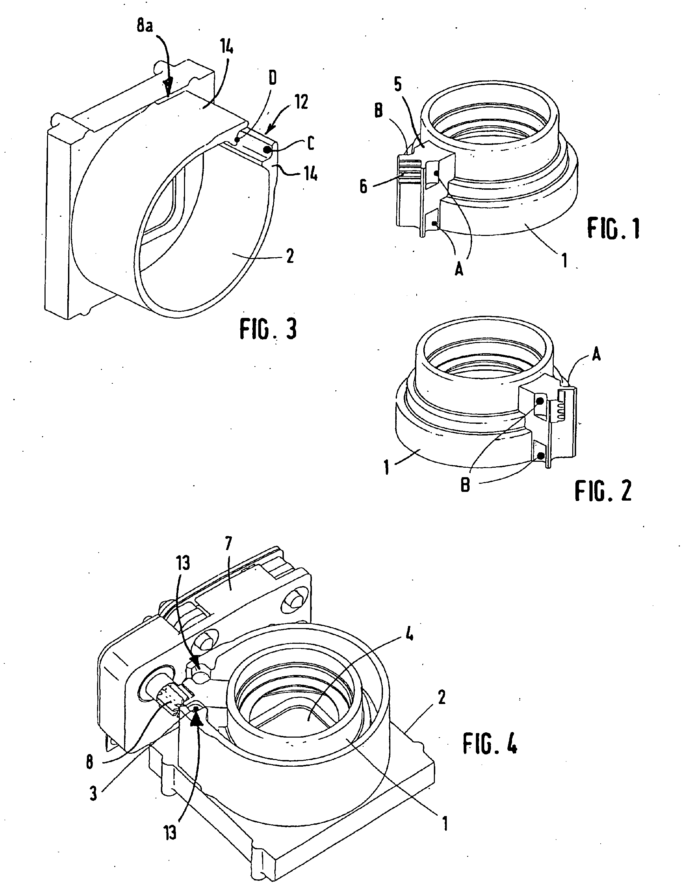

Die Fig. 1 bis 8 zeigen ein erstes Ausführungsbeispiel eines Objektives für ein Mobiltelefon mit integriertem Chip, sowie die Einzelteile Linsenträger und Stator und die fertig montierte Baugruppe. Die in den Fig. 1 - 8 gezeigte Grund-Baugruppe zur Bildung einer Optik oder Kamera oder Bildaufnahmeeinheit besteht im Wesentlichen aus zwei Bauteilen. Dem sog. Barrel oder Linsenträger 1 und dem Stator 2. Der Linsenträger 1 weist zwei oder mehr Führungsbahnen A und B längs der optischen Achse auf, die als Laufbahn für Wälzkörper geeignet sind. Die Führungsbahnen A, B sind einander gegenüberliegend an einem seitlichen Ansatz 5 ausgebildet.

Der Stator 2, an dem ein der Bildaufnahme dienender Digitalchip 4 angeordnet ist, besitzt ebenfalls Führungsbahnen C und D, die längs der optischen Achse verlaufen, und zwischen denen ein Aufnahmeraum 12 vorgesehen ist, in den der Ansatz 5 des Linsenträgers eingreift, siehe Fig. 4. Die beiden Geometrien bzw. Anordnungen der Führungsbahnen A, B, C, D sind so gestaltet, dass sie beim Zusammenbau der Bauteile einander gegenüberliegende Führungskanäle 13 ergeben, in denen Wälzkörper 3, hier Kugeln, abrollen können.

Werden die Bauteile nun mit mindestens drei, gegebenenfalls auch den hier gezeigten vier Wälzkörpern 3 montiert, können die beiden Bauteile Linsenträger 1 und Stator 2 relativ zueinander bewegt werden. Dabei wälzen sich die Wälzkörper auf den Führungsbahnen A, B, C, D ab. Es entsteht Rollreibung, die ein wesentlicher Vorzug gegenüber den üblichen Gleitreibungsführungen darstellt. Bei der vorliegenden Erfindung entsteht auch bei sehr kleinen Positionierbewegungen kein Slipstick-Effekt. Die notwendige Antriebskraft reduziert sich auf die Rollreibung und ist deshalb äußerst gering.

Zum Antrieb ist an dem Ansatz 5 ein Verzahnungsabschnitt 6 vorgesehen. Für die Bewegung des Linsenträgers 1 relativ zum Stator 2, in dem der Linsenträger 1 nach der Montage teilweise oder vollständig aufgenommen ist, dient ein sehr kleiner Motor 7 (Micromotor) mit einem Ritzel 8, das mit dem Verzahnungsabschnitt 6 kämmt (vgl. die Fig. 4 - 8). Hierüber kann der Linsenträger 1 mit der darin eingebauten, hier nicht näher gezeigten Linse axial entlang der Wälzlagerführung und damit längs einer exakt senkrecht auf der Chip-Bildebene stehenden Bewegungsachse bewegt werden. Der Motor 7 wird über eine geeignete Steuerungseinrichtung angesteuert.

Vorzugsweise ist eine Vorspannung vorhanden, die alle Wälzkörper stabilisiert. Dies ist aber nicht unbedingt notwendig, da eine Käfigkonstruktion, die einzelne Wälzkörper führt (ähnlich Kugellager) ebenfalls denkbar ist. Andere Wälzkörper als Kugeln (z. B. Rollen oder Nadeln) sind denkbar, die Führungsbahnen sind dann entsprechend auszuführen. Die Vorspannung garantiert, dass die Genauigkeit der Planizität von Bild und Bilderfassungsebene (Chipebene) bestmöglich erreicht wird. Bei den bekannten Lösungen verursacht, speziell bei den kleinen Digitalobjektiven, das Spiel in den Gleitführungen einen großen Fehler in der Abbildung.

In den Stator 2 kann bei vorliegender Lösung direkt die Bilderfassung (Chip 4) eingebaut und positioniert werden. Dadurch, dass sie sich am gleichen Bauteil ausrichtet wie der Linsenträger 1 entstehen geringste Fehlpositionierungen zwischen Bilderfassung und Optik. Die Genauigkeiten sind also nur noch von wenigen Bauteiltoleranzen abhängig.

Geringste Kräfte reichen aus, um die Linsen zu deformieren, was erheblich zum Qualitätsverlust der Abbildung beiträgt. Wird die Führungsgeometrie wie erfindungsgemäß vorgesehen und realisiert so aufgebaut, dass die Vorspannungskraft nicht auf den Linsenträger 1 geleitet wird, so bleiben die Linsen komplett ohne Krafteinwirkung von außen. Statisch und dynamisch ist dies eine wesentliche Verbesserung für die Bildqualität. In der vorliegenden Ausführung eliminieren sich die Vorspannungskräfte am Linsenträger 1 durch die Anordnung der Führungsbahnen. Dieser ist somit spannungsfrei einzubauen und zu positionieren.

Die Führungsbahnen A, B, C, D im Stator 2 oder auch im Linsenträger 1 können unter Vorspannung gesetzt werden, oder auch federnd aufgebaut werden. Die Anpresskraft, mit der die Wälzkörper 3 auf die Bahn gedrückt werden ist damit einstellbar und nachjustierbar. Im dargestellten Beispiel sind die Statorbahnen C, D gefedert realisiert, d. h. die die statorseitigen Führungsbahnen C, D aufweisenden Abschnitte 14 sind bodenseitig nicht fest mit dem Träger des Chips 4 verbunden, sondern über einen kurzen, schmalen Spalt 8a getrennt, um die Federbarkeit zu ermöglichen.

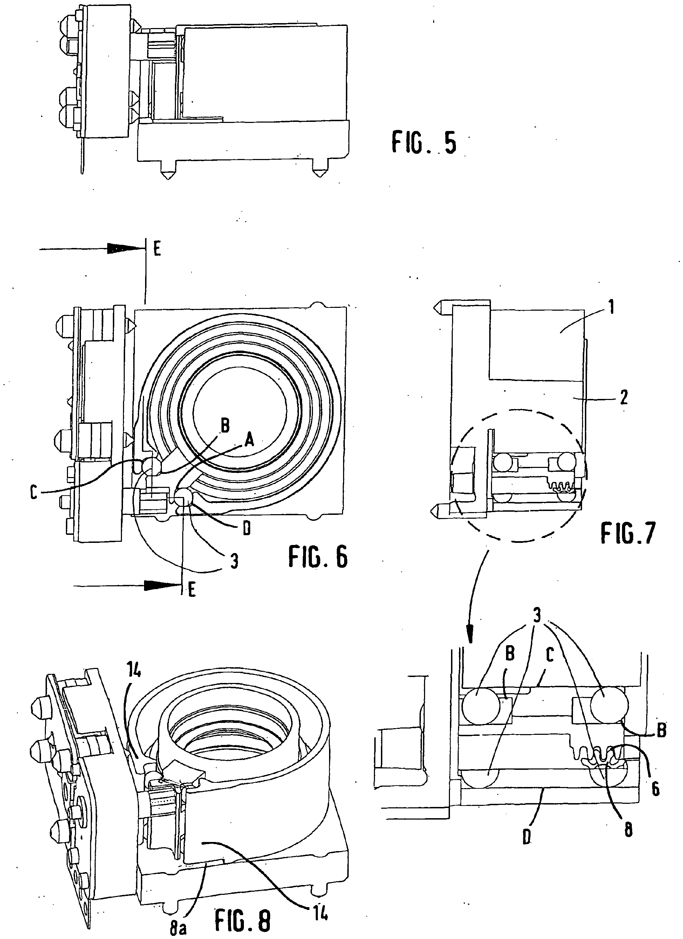

Wird das bewegte Element - hier der Linsenträger 1 - in der Nähe der Lagerung, wie erfindungsgemäß über den direkten Angriff des Motorritzels 8 am lagerseitigen Verzahnungsabschnitt 6 vorgesehen, angetrieben, so beeinflussen die Antriebskräfte das bewegte Element in keiner Weise. Die Kräfte werden durch die Führung aufgenommen, eine extrem genaue Positionierung mit geringsten Abweichungen ist möglich. Insbesondere Fig. 6 und der vergrößerten Darstellung in Fig. 7 ist der Aufbau der Linearführung zu entnehmen. Gezeigt sind die Wälzkörper 3 sowie die Führungsbahnen A, B, C, D am Ansatz 5 bzw. am Stator 2, sowie der Verzahnungsabschnitt 6 und das Ritzel 8. Die Führungsbahnen A und B sind bei diesem Beispiel nicht durchgängig, sondern, siehe hierzu auch die Fig. 1 und 2, in jeweils zwei Abschnitte unterteilt.

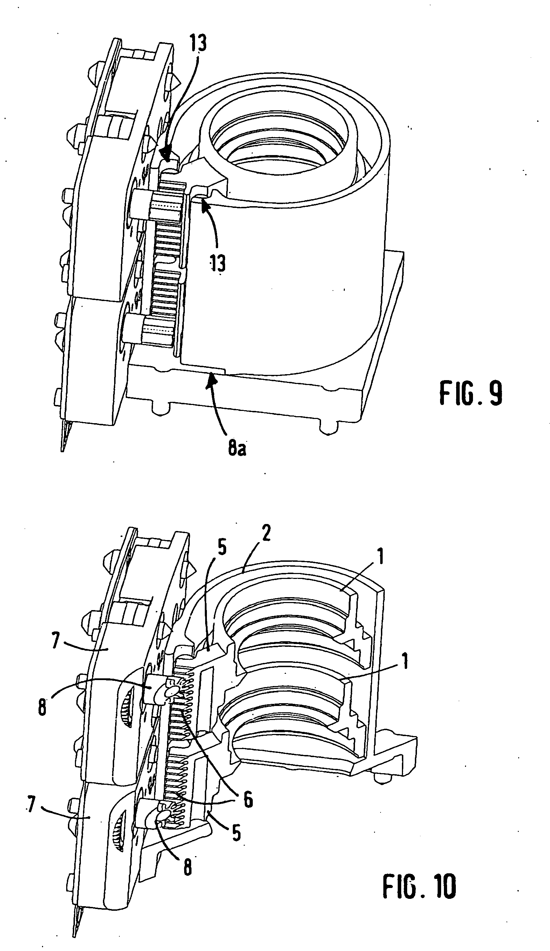

Die Fig. 9 und 10 zeigen eine zweite Ausführungsform einer Optikbaueinheit mit zwei Linsengruppen, die unabhängig voneinander durch zwei Motoren bewegt werden können, beide laufen in denselben Führungsbahnen des Stators. Die Fig. 9 und die geschnittene Fig. 10 zeigen zwei Linsenträger 1 mit jeweils einer (nicht gezeigten) Linse, die in einem gemeinsamen Stator 2 aufgenommen sind. Jeder Linsenträger 1 weist wie bei der zuvor beschriebenen Ausführung zwei Führungsbahnen A, B am jeweiligen Ansatz 5 auf, am Stator 2 sind ebenfalls zwei Führungsbahnen C, D zur Bildung der Wälzkörperkanäle 13 realisiert. Jeder Ansatz 5 weist einen eigenen Verzahnungsabschnitt 6 auf, ferner sind zwei separat betreibbare und über eine vorzugsweise gemeinsame Steuerungseinrichtung separat ansteuerbare Motoren 7 mit jeweils einem Ritzel 8 vorgesehen, von denen jeweils eines mit einem der Verzahnungsabschnitte 6 der Linsenträger 1 kämmt. Beide Linsenträger 1 sind separat voneinander bewegbar und relativ zum statorseitig angeordneten Chip 4 (hier nicht gezeigt) exakt senkrecht zu dessen Bildaufnahmeebene axial verstellbar.

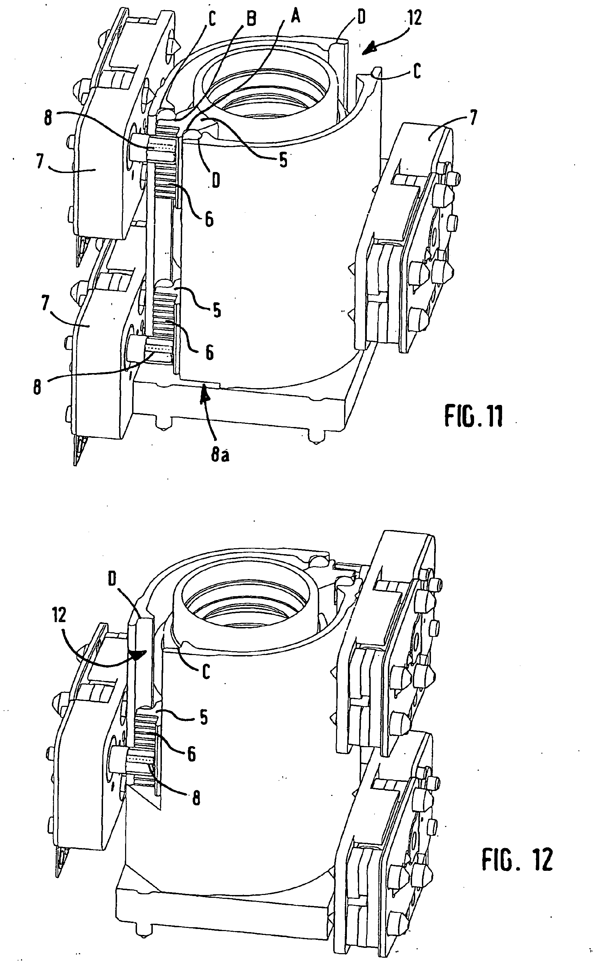

Die Fig. 11 und 12 zeigen eine dritte Ausführungsform einer Optikbaueinheit mit drei Linsengruppen, die unabhängig voneinander durch drei Motoren bewegt werden können. Bei der Ausführung nach den Fig. 11 und (um 180° gedreht) 12 sind drei Linsenträger 1 vorgesehen, die in der zuvor beschriebenen Art ausgebildet sind. Sie sind gemeinsam in einem Stator 2 aufgenommen. Dieser weist an zwei gegenüberliegenden Seiten eine längliche Durchbrechung (Aufnahmeräume 12) auf, an deren Rand jeweils zwei Führungsbahnen C, D ausgebildet sind. Während der obere und der untere Linsenträger 1 mit gleicher Orientierung deckungsgleich zueinander angeordnet sind, ist der mittlere Linsenträger 1 um 180° verdreht dazu angeordnet und greift mit seinem Ansatz 5 zwischen die beiden anderen Führungsbahnen C, D ein. Entsprechend sind an der einen Statorseite zwei Motoren 7 zum separaten Bewegen des oberen und unteren Linsenträgers 1 vorgesehen, während an der anderen Seite ein Motor 7 zum Bewegen des mittleren Linsenträgers 1 angeordnet ist. Alle Linsenträger 1 und damit Linsen oder Linsengruppen (in einem Linsenträger 1 kann grundsätzlich nur eine, aber auch mehrere Linsen angeordnet sein) sind separat voneinander und zueinander bewegbar. Der Antrieb erfolgt auch hier über Verzahnungsabschnitte 6 und motorseitige Ritzel 8.

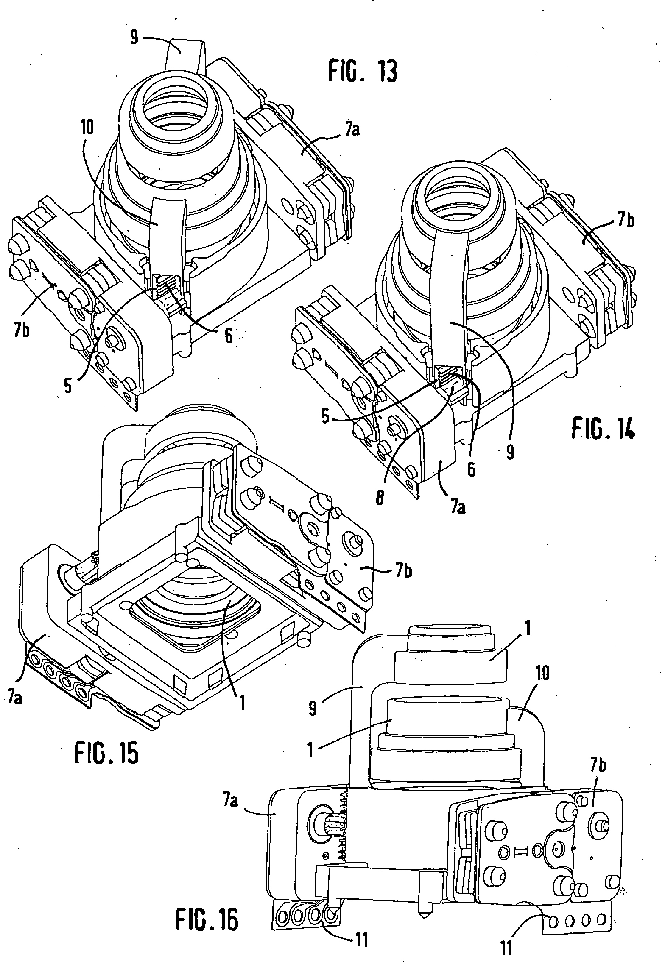

Die Fig. 13 bis 16 zeigen eine vierte Ausführungsform, in der zwei Linsenträger bewegungsgekoppelt sind und gleichzeitig bewegt werden, während ein weiterer Linsenträger dazwischen unabhängig bewegt wird, was dem Prinzipaufbau eines Zoomobjektes entspricht. Die Fig. 13 bis 16 zeigen eine erfindungsgemäße (Miniatur)-Optik, bei der wiederum drei Linsenträger 1 mit jeweils einer oder mehrere Linsen vorgesehen sind. Auch hier ist nur ein Stator 2 vorgesehen, jedoch ist dieser nicht so hoch wie die Gesamthöhe der drei Linsenträger 1, vielmehr ist hier nur der untere Linsenträger 19 im Stator 2 aufgenommen. Der untere Linsenträger 1 und der obere Linsenträger 1 sind über einen Verbindungsarm 9 verbunden, so dass sie über den zugeordneten Motor 7a und den am unteren Linsenträger befindlichen Ansatz 5 mit Verzahnungsabschnitt 6 gemeinsam relativ zum mittleren Linsenträger 1 mit dessen Linse(ngruppe) bzw. zum (nicht gezeigten) Bildaufnahmechip (z. B. CCD-Chip 4) bewegt werden können. Der mittlere Linsenträger 1 ist wiederum über einen eigenen Motor 7b bewegbar. Da der Stator 2 den mittlere Linsenträger 1 nicht umschließt, ist dieser mit einem den Ansatz 5 bildenden Lagerarm 10 versehen, an dem der Verzahnungsabschnitt 6 wie auch die Führungsbahnen A, B ausgebildet. Der Stator 2 weist auch hier zwei einander gegenüberliegende Durchbrechungen (Aufnahmeräume 12) auf, an denen die Führungsbahnen C, D für die Lagerung des unteren Linsenträgers 1 und des mittleren Linsenträgers 1 vorgesehen sind. Die beiden Motoren 7a, 7b befinden sich in einer Ebene. Mit einer solchen Ausgestaltung kann eine Zoom-Optik bzw. Zoom-Kamera realisiert werden.

Wie die Fig. 13 - 16 ferner zeigen, sind Befestigungselemente 11 vorgesehen, mit denen die Optik oder Kamera an einem Drittgegenstand z. B. einem Mobiltelefongehäuse befestigt werden kann. Als Befestigungselemente können Schraubverbindungen oder Schnapp-Rast-Verbindungen o. ä. vorgesehen werden. Derartige Befestigungselemente sind vorzugsweise bei allen beschriebenen Ausgestaltungen vorzusehen.

Anstatt des Linsenträgers können so auch andere optische Komponenten so bewegt werden, wie Shutter, Einzellinsen, Blenden usw. Mehrere bewegte Komponenten sind ebenfalls denkbar. Auch eine Bewegung mehrerer Komponenten unabhängig voneinander ist denkbar, z. B. zum Aufbau eines Zoomobjektives, wie bzgl. der Fig. 13 - 16 beschrieben.

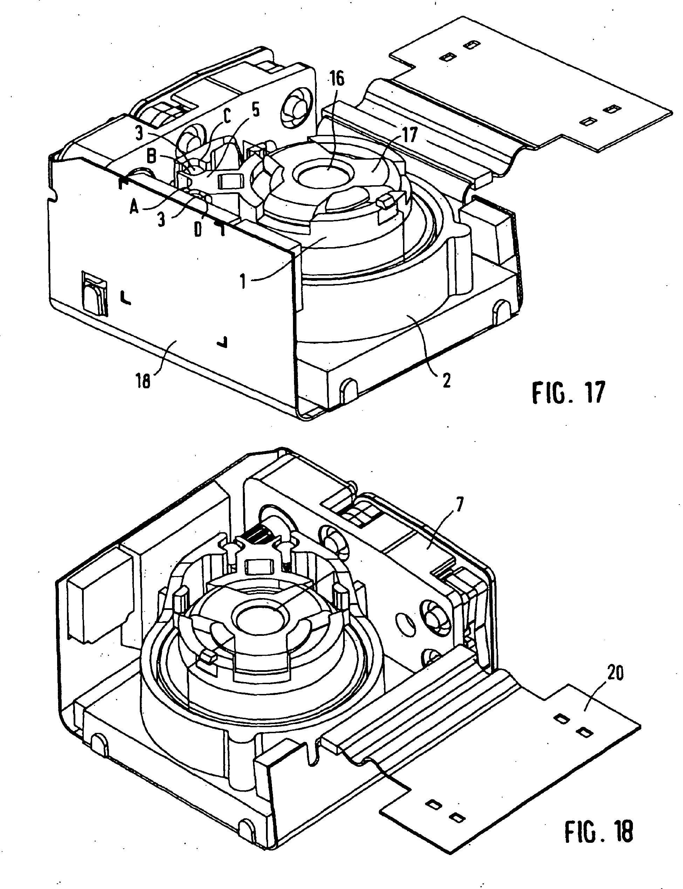

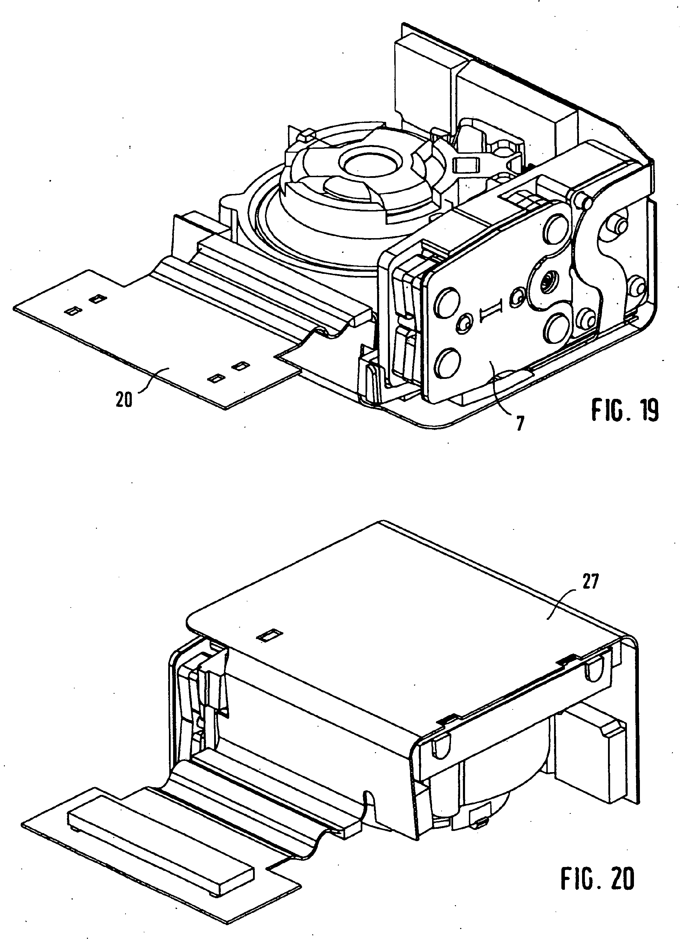

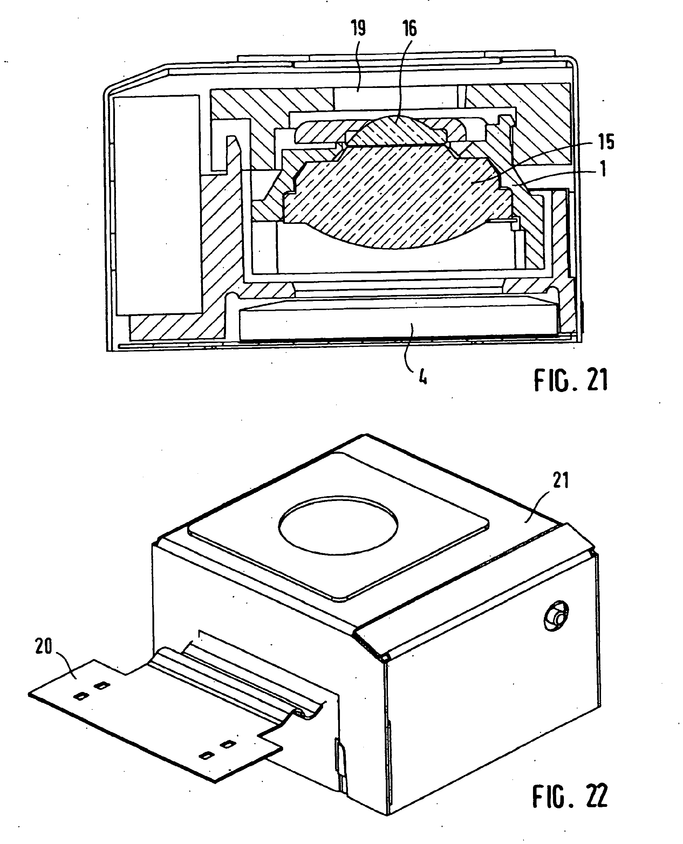

Die Fig. 17 - 20 zeigen eine weitere erfindungsgemäße Optikeinheit, die dem Grunde nach dem Aufbau der Optikeinheit aus den Fig. 1 - 8 entspricht. Auch sie weist einen Stator 2 und einen Linsenträger 1 auf, wobei zwischen beiden die erfindungsgemäße Wälzlagerlinearführung mit den Führungsbahnen A, B, C und D und den in den Führungskanälen geführten Wälzkörpern 3 vorgesehen ist. Der Linsenträger 1 weist, siehe auch Fig. 21, eine erste Linse 15 und eine zweite Linse 16 auf, die über ein dreibeinartiges Halteelement 17, das im Rahmen der Montage verschiebbar am Linsenträger 1 positionierbar ist, um die zweite Linse 16 auszurichten, gehaltert ist. Das Halteteil 17 wird selbstverständlich nach Ausrichtung der zweiten Linse 16 fixiert.

Gezeigt ist ferner ein flexibles Leiterplattenband 18, das um drei Seiten der Optikbaueinheit herumgewickelt ist. Das Leiterplattenband 18 weist sämtliche erforderlichen Leiter- bzw. Verbindungsbahnen auf, die zum Kontaktieren der ansteuerbaren Bauteile der Optikeinheit dienen, also der Bildaufnahmeeinheit 4, des Stellelements 7, also des Motors, bei dem es sich auch um einen piezoelektrischen Motor handeln kann, sowie etwaiger weiterer in den Fig. 17 - 20 nicht näher gezeigter optischer Komponenten wie beispielsweise eines kombinierten Bauteils 19 enthaltend einen Verschluss und eine Blende, die ebenfalls über eine externe Steuerungseinrichtung angesteuert werden können. Zur Verbindung mit der externen Steuerungseinrichtung ist eine Anschlussfahne 20 mittels des flexiblen Leitplattenbandes 18 realisiert, an die die Steuerungseinrichtung des Mobiltelefons angeschlossen wird. Die Ausgestaltung ist dabei derart, dass die einzelnen Teile wie Motor etc. nicht aufwendig und separat mit der Leiterplattenbahn 18 zu koppeln sind, sondern dass dies automatisch beim "Umwickeln" des Leiterplattenbandes 18 erfolgt, wozu die hierfür erforderlichen Kontaktpunkte an dem Leiterplattenband 18 entsprechend der Lage der Anschlussabschnitte der jeweiligen ansteuerbaren elektrischen oder elektromechanischen Komponente positioniert sind. An der Unterseite des flexiblen Leiterplattenbandes 18 ist eine Klebefläche 27 ausgebildet, die ein Befestigungselement dargestellt, über das die Optikbaueinheit beispielsweise an einer Befestigungsfläche des Mobiltelefons verklebt wird. Denkbar ist es auch, dass die Optikbaueinheit neben der kompletten Bildverarbeitungseinheit auch die Motorsteuerung aufweist. Die Bilddaten werden also seitens der Optikbaueinheit erzeugt, die Leitungsverbindung zum Telefon bzw. dessen Steuerungsmodul dient nur der Übermittlung der Bilddaten der Kamera an den dortigen Speicher und der Auslösesteuerung. Die Steuerung des oder der Motoren der Optikbaueinheit erfolgt über die eigene integrierte Motorsteuerung.

Wie bereits beschrieben zeigt die fertige Optikbaueinheit auch ein integriertes Bauteil 19 umfassend einen Verschluss und eine Blende auf. Bei der beschriebenen Ausgestaltung gemäß Fig. 21 ist dieses Bauteil 19 am Linsenträger 1 befestigt, steht folglich in einer festen Lagebeziehung zu den beiden Linsen 15 und 16. Das Verschluss-Blenden-Bauteil 19 wird bei dieser Ausgestaltung zusammen mit dem Linsenträger 1 und folglich den Linsen 15, 16 relativ zum Stator 2 und damit zum Bildaufnahmechip 4 bewegt. Selbstverständlich ist es auch denkbar, das Bauteil 19 an einem eigenen Träger, der wie ein Linsenträger 1 einen entsprechenden Verzahnungsabschnitt oder dergleichen, über den die Kopplung zu einem separaten Stellmotor erfolgt, selbstständig beweglich zu lagern. Die unmittelbare Anordnung des Bauteils 19 nahe benachbart zu der Linsengruppe ist jedoch zur Vermeidung etwaiger Abbildungsfehler zweckmäßig.

Weiterhin zeigen die Fig. 21 und 22 ein metallenes Gehäuse 21, das die gesamte Optikbaueinheit kapselt und aus dem lediglich noch die Anschlussfahne 20 hervorsteht.

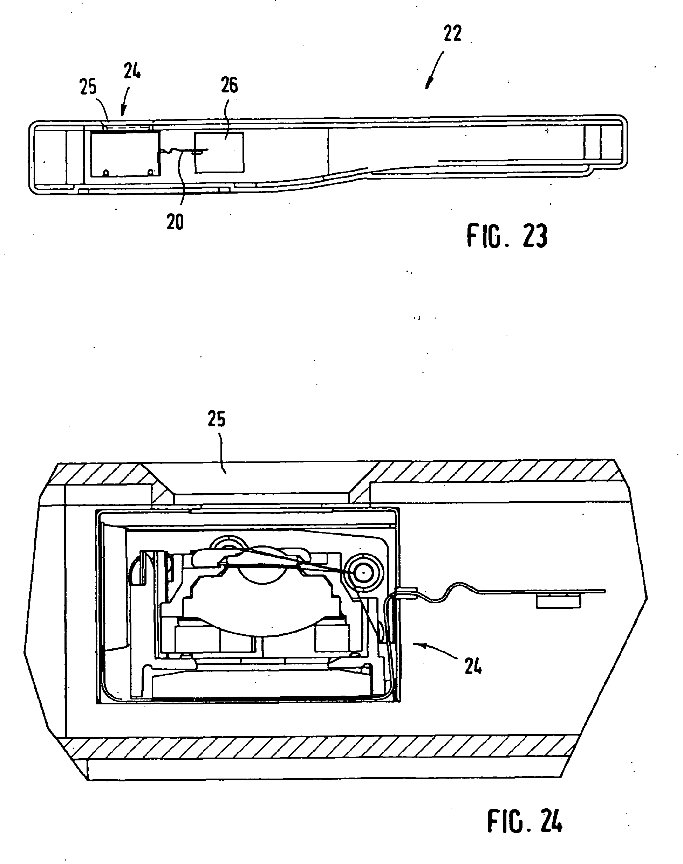

Ein erfindungsgemäßes Mobiltelefon 22 ist in den Fig. 23 und 24 gezeigt. In der Prinzipskizze gemäß Fig. 23 ist eine erfindungsgemäße Optikbaueinheit 24, die beliebiger Natur sein kann (selbstverständlich sind die zuvor beschriebenen Ausgestaltungen der Optikbaueinheiten nicht abschließend und begrenzend) gezeigt, die unterhalb eines transparenten Fensters 25 in an sich bekannter Weise angeordnet ist. Gezeigt ist hier lediglich exemplarisch die externe Steuerungseinrichtung 26 nebst Bilddatenspeicher des Mobiltelefons 22, die über die Anschlussfahne 20 mit der Optikbaueinheit 24 gekoppelt ist und die (komplette oder teilweise) Steuerung derselben übernimmt. Je nach Bedarf kann nun je nach Ausgestaltung der Optikbaueinheit 24, die im Beispiel gemäß Fig. 24 letztlich der Optikbaueinheit aus Fig. 21 entspricht, eine Verstellung der Linsenoptik nebst zugeordneter Verschluss-Blenden-Baueinheit erreicht werden. In Folge der hoch exakten Führung der optisch arbeitenden Komponenten, hier also des Linsenträger nebst zugeordneten weiteren optischen Komponenten, relativ zum Bildaufnahmemittel, hier also des Chips 4 bzw. der Bildaufnahmeebene kann eine äußerst exakte Positionierung, die Grundvoraussetzung für eine optisch einwandfreie Bildaufnahme ist, erreicht werden.

Vorteile der vorliegenden erfindungsgemäßen Lösung:
- Nur zwei Bauteile
- Diese Bauteile sind gleichzeitig die Führungen
- Keine Belastung auf die optischen Elemente
- Trotzdem vorgespannte Führung möglich (Spielfrei)
- Rollreibung, kein Slipstick-Effekt, geringe Antriebskraft
- Äußerst kompakte Bauweise mit geringsten Bauhöhen (wichtig für Handyobjektive)
- Die Toleranzkette zwischen Optik und Bilderfassung ist äußerst gering
- Im Beispiel ist der Stator gleichzeitig Schutzgehäuse für die Optik und den Bildsensor
- Hohe Steifigkeit der Baugruppe und der Führung, ohne die optischen Elemente zu beeinflussen
- Führungsgenauigkeit ist nur von zwei Bauteilen abhängig
- Bewegung unterschiedlicher Einzelkomponenten unabhängig voneinander ist möglich
- Unempfindlich gegen Erschütterungen
- Verwindungssteif
- Durch die Verwendung gleicher Materialien ist der Einfluss von Temperaturschwankungen auf die Lage der optischen Achse äußerst gering
- Die Bilderfassungselemente sind im gleichen Bauteil montiert (Stator), wie das Objektiv.

## Patentansprüche

1. Kleinbauende Optikeinheit, insbesondere für eine Mobiltelefonkamera, bestehend aus einem Stator und wenigstens drei Wälzkörpern und wenigstens einer optischen Komponente, insbesondere einem Linsenträger wobei die optische Komponente, (1) am Stator (2) über eine Wälzlagerlinearführung mit am Stator (2) ausgebildeten Wälzkörperführungsbahnen (A, B, C, D) gelagert ist, wobei im Bereich der Wälzlagerlinearführung ein motorisches Stellelement (7, 7a, 7b) an der optischen Komponente (1) angreift, so dass die optische Komponente (1) längs einer vertikal auf einer Bildaufnahmeebene des Bildaufnahmemittels (4) stehenden Achse relativ zum Stator (2) bewegbar ist, **dadurch gekennzeichnet, dass** an der optischen Komponente (1) ein seitlicher Ansatz (5) vorgesehen ist, an dem seitlich einander gegenüberliegend zwei Führungsbahnen (A, B) ausgebildet sind, wobei der Ansatz (5) in einen am Stator (2) vorhandenen Aufnahmeraum (12) mit zwei einander gegenüberliegenden Führungsbahnen (C, D) eingreift, und wobei sich die einander gegenüberliegenden Führungsbahnen (A, B, C, D) des Ansatzes (5) und des Aufnahmeraums (12) zu zwei Führungskanälen (13), in denen die Wälzkörper aufgenommen sind, ergänzen, und wobei die optische Komponente (1) über die wenigstens drei Wälzkörper (3) geführt ist.

2. Optikbaueinheit nach Anspruch 1, **dadurch gekennzeichnet, dass** die Wälzkörper (3) unter Vorspannung aufgenommen sind.

3. Optikbaueinheit nach Anspruch 1 oder 2, **dadurch gekennzeichnet, dass** die Führungsbahnen (C, D) des Stators (2) federnd ausgebildet sind.

4. Optikbaueinheit nach Anspruch 3, **dadurch gekennzeichnet, dass** die Führungsbahnen (C, D) an am Stator (2) federnd ausgebildeten Abschnitten (14) vorhanden sind.

5. Optikbaueinheit nach Anspruch 4, **dadurch gekennzeichnet, dass** die federnden Abschnitte (14) über einen schmalen Spalt (8a) vom Statorboden beabstandet sind.

6. Optikbaueinheit nach einem der vorangehenden Ansprüche, **dadurch gekennzeichnet, dass** an einem oder dem an der optischen Komponente, insbesondere dem Linsenträger (1) vorgesehenen seitlichen Ansatz (5) ein Verzahnungsabschnitt (6) vorgesehen ist, mit dem ein Ritzel (8) des motorischen Stellelements (7, 7a, 7b) kämmt.

7. Optikbaueinheit nach einem der vorangehenden Ansprüche, **dadurch gekennzeichnet, dass** zwei oder mehr optische Komponenten, insbesondere zwei oder mehr Linsenträger (1) und ein gemeinsamer Stator (2) vorhanden sind.

8. Optikbaueinheit nach Anspruch 7, **dadurch gekennzeichnet, dass** jede optische Komponente, insbesondere jeder Linsenträger (1) über ein eigenes motorisches Stellelement (7) separat relativ zum Stator (2) bewegbar ist, oder dass zumindest ein Teil optischen Komponenten, insbesondere der Linsenträger (1) miteinander bewegungsgekoppelt und über ein gemeinsames motorisches Stellelement (7a) bewegbar ist, während die andere(n) optischen Komponenten, insbesondere der oder die anderen Linsenträger (1) über gegebenenfalls jeweils ein eigenes motorisches Stellelement (7b) relativ zum Stator (2) bewegbar ist.

9. Optikbaueinheit nach Anspruch 7 oder 8, **dadurch gekennzeichnet, dass** zwei oder mehr optische Komponenten, insbesondere zwei oder mehr Linsenträger (1) vorhanden sind, deren Ansätze (5) übereinander liegen und in einen gemeinsamen Aufnahmeraum (12) eingreifen.

10. Optikbaueinheit nach Anspruch 8, **dadurch gekennzeichnet, dass** zwei oder mehr optische Komponenten, insbesondere zwei oder mehr Linsenträger (1) vorgesehen sind, wobei die Ansätze (5) der übereinander angeordneten optische Komponenten, insbesondere Linsenträger (1) um einen Winkel verdreht zueinander, vorzugsweise abwechselnd zur einen und um 180° gedreht zur anderen Seite ausgerichtet sind, wobei der Lage der Ansätze (5) entsprechend an einander gegenüberliegenden Seiten des Stators (2) Aufnahmeräume (12) für die jeweiligen Ansätze (5) vorhanden sind.

11. Optikbaueinheit nach Anspruch 10, **dadurch gekennzeichnet, dass** drei optische Komponenten, insbesondere drei Linsenträger (1) vorgesehen sind, wobei die Ansätze (5) der unteren und der oberen optischen Komponente, insbesondere des unteren und des oberen Linsenträgers (1) übereinander liegen und in einen gemeinsamen Aufnahmeraum (12) eingreifen, während der Ansatz (5) der mittleren optischen Komponente, insbesondere des mittleren Linsenträgers (1) um einen Winkel verdreht, vorzugsweise an der gegenüberliegenden Seite angeordnet ist und in einen entsprechend versetzt angeordneten, vorzugsweise an der gegenüber liegenden Statorseite vorgesehenen Aufnahmeraum (12) eingreift.

12. Optikbaueinheit nach Anspruch 8, **dadurch gekennzeichnet, dass** drei oder mehr optische Komponenten, insbesondere drei oder mehr Linsenträger (1) vorhanden sind, wobei lediglich die untere erste und die folgende optische Komponente, insbesondere der untere erste und der folgende zweite Linsenträger (1) einen Ansatz (5) aufweisen, welche Ansätze (5) um einen Winkel, vorzugsweise 180° verdreht zueinander einander positioniert und in entsprechenden Aufnahmeräumen (12) des Stators (2) angeordnet sind, und wobei die dritte und gegebenenfalls folgende optische Komponenten, insbesondere der dritte und gegebenenfalls folgende Linsenträger (1) mit der untersten ersten oder der folgenden optischen Komponente, insbesondere dem unteren ersten oder dem folgenden zweiten Linsenträger (1) über einen Verbindungsarm (9) bewegungsgekoppelt ist.

13. Optikbaueinheit nach einem der Ansprüche 7 bis 12, **dadurch gekennzeichnet, dass** wenigstens eine optische Komponente ein Linsenträger (1) und wenigstens eine optische Komponente ein Verschluss und/oder eine Blende ist.

14. Optikbaueinheit nach Anspruch 13, **dadurch gekennzeichnet, dass** der Verschluss und die Blende in einem gemeinsamen Bauteil (19) integriert sind.

15. Optikbauteil nach Anspruch 13 oder 14, **dadurch gekennzeichnet, dass** der Verschluss und/oder die Blende oder das gemeinsame Bauteil (19) an einem Linsenträger (1) angeordnet und mit diesem bewegbar ist.

16. Optikbaueinheit nach einem der vorangehenden Ansprüche, **dadurch gekennzeichnet, dass** mehrere motorische Stellelemente (7, 7a, 7b) über eine gemeinsame Steuerungseinrichtung ansteuerbar sind.

17. Optikbaueinheit nach einem der vorangehenden Ansprüche, **dadurch gekennzeichnet, dass** am Stator (2) ein oder mehrere Befestigungselemente (1) zum Befestigen der Optikbaueinheit an einem Drittgegenstand vorhanden sind.

18. Optikbaueinheit nach Anspruch 17, **dadurch gekennzeichnet, dass** die Befestigungselemente (11) Schraubverbindungen oder Schnapp-Rast-Verbindungen sind, oder ein Befestigungselement als eine Klebefläche (27) ausgebildet ist.

19. Optikbaueinheit nach einem der vorangehenden Ansprüche, **dadurch gekennzeichnet, dass** das Bildaufnahmemittel (4) am Stator (2) angeordnet ist.

20. Optikbaueinheit nach einem der vorangehenden Ansprüche, **dadurch gekennzeichnet, dass** ein mit einer externen Steuerungseinrichtung (26) ver-bindbares flexibles Leiterplattenband (18) vorhanden ist, mit dem das Bildaufnahmemittel (4) und das motorische Stellelement und gegebenenfalls weitere optische Komponenten oder solche enthaltende Bauteile (19) verbunden Ist.

21. Optikbaueinheit nach einem der vorangehenden Ansprüche, **dadurch gekennzeichnet, dass** sie ein metallenes Gehäuse (21) aufweist.

22. Mobiltelefon, umfassend eine Optikbaueinheit nach einem der vorangehenden Ansprüche.

## Claims

1. A miniaturised optical assembly, especially for a mobile telephone camera, comprising a stator and at least three roller elements and at least one optical component, especially a lens carrier,
wherein the optical component (1) is mounted on the stator (2) via a roller-bearing linear guide with roller-element guide tracks (A, B, C, D) formed on the stator, wherein a motorised adjustment element (7, 7a, 7b) engages with the optical component (1) in the region of the roller-bearing linear guide, so that the optical component (1) can be displaced relative to the stator (2) along an axis disposed vertically in an image-recording plane of the image-recording means (4),
**characterised in that**
a lateral shoulder (5) on which two guide tracks (A, B) disposed laterally opposite to one another are embodied is provided on the optical component (1),
wherein the shoulder (5) engages in a retaining recess (12) present in the stator (2) with two guide tracks (C, D) disposed opposite to one another,
and wherein the mutually opposite guide tracks (A, B, C, D) of the shoulder (5) and of the retaining recess (12) combine to form two guide channels (13), in which the roller elements are retained,
and wherein the optical component (1) is guided via the at least three roller elements (3).

2. The optical assembly according to claim 1,
**characterised in that**
the roller elements (3) are retained under tension.

3. The optical assembly according to claim 1 or 2,
**characterised in that**
the guide tracks (C, D) of the stator (2) are embodied in a resilient manner.

4. The optical assembly according to claim 3,
**characterised in that**
the guide tracks (C, D) are present on portions (14) of the stator (2) embodied in a resilient manner.

5. The optical assembly according to claim 4,
**characterised in that**
the resilient portions (14) are distanced from the stator base by a narrow gap (8a).

6. The optical assembly according to any one of the preceding claims,
**characterised in that**
a toothed portion (6) which engages with a pinion (8) of the motorised adjustment element (7, 7a, 7b) is provided on one or on the lateral shoulder (5) provided on the optical component, especially the lens carrier (1).

7. The optical assembly according to any one of the preceding claims,
**characterised in that**
two or more optical components, especially two or more lens carriers (1) and a common stator (2) are present.

8. The optical assembly according to claim 7,
**characterised in that**
each optical component, especially each lens carrier (1) can be displaced separately relative to the stator (2) via its own motorised adjustment element (7), or that at least some of the optical components, especially the lens carrier (1), are movably connected to one another and can be displaced via a common motorised adjustment element (7a), while the other optical component(s), especially the other lens carrier(s) (1) can be displaced relative to the stator (2), optionally in each case, via its own motorised adjustment element (7b).

9. The optical assembly according to claim 7 or 8,
**characterised in that**
two or more optical components, especially two or more lens carriers (1), of which the shoulders (5) are disposed one above the other and engage in a common retaining recess (12) are present.

10. The optical assembly according to claim 8,
**characterised in that**
two or more optical components, especially two or more lens carriers (1) are provided,
wherein the shoulders (5) of the optical components, especially lens carriers (1), disposed one above the other are orientated relative to one another rotated through an angle, preferably alternately on the one side and rotated through 180° on the other side,
wherein retaining recesses (12) for the respective shoulders (5) are present corresponding to the position of the shoulders (5) on mutually opposite sides of the stator (2).

11. The optical assembly according to claim 10,
**characterised in that**
three optical components, especially three lens carriers (1) are provided,
wherein the shoulders (5) of the lower and the upper optical component, especially the lower and the upper lens carrier (1), are disposed one above the other and engage in a common retaining recess (12),
while the shoulder (5) of the middle optical component, especially the middle lens carrier (1), is arranged preferably on the opposite side, rotated through an angle, and engages in a retaining recess (12) arranged in a correspondingly offset manner, preferably provided on the opposite side of the stator (2).

12. The optical assembly according to claim 8,
**characterised in that**
three or more optical components, especially three or more lens carriers (1) are present,
wherein only the lower first and the following optical component, especially the lower first and the following second lens carrier (1) provide a shoulder (5), which shoulders (5) are positioned rotated through an angle, preferably 180°, relative to one another and arranged in corresponding retaining recesses (12) of the stator (2), and wherein the third and optionally following optical components, especially the third, and optionally following, lens carrier(s) (1) is movably connected to the lowest first or to the following optical component, especially to the lower first or to the following second lens carrier (1) via a connecting arm (9).

13. The optical assembly according to any one of claims 7 to 12,
**characterised in that**
at least one optical component is a lens carrier (1) and at least one optical component is a closure and/or a shutter.

14. The optical assembly according to claim 13,
**characterised in that**
the closure and the shutter are integrated within a common component (19).

15. The optical assembly according to claim 13 or 14,
**characterised in that**
the closure and/or the shutter or the common component (19) is arranged on a lens carrier (1) and can be moved with the latter.

16. The optical assembly according to any one of the preceding claims,
**characterised in that**
several motorised adjustment elements (7, 7a, 7b) can be controlled via a common control unit.

17. The optical assembly according to any one of the preceding claims,
**characterised in that**
one or more attachment elements (1) for the attachment of the optical assembly to a third object are present on the stator (2).

18. The optical assembly according to claim 17,
**characterised in that**
the attachment elements (11) are screw connections or snap-locking connectors, or an attachment element is embodied as an adhesive surface (27).

19. The optical assembly according to any one of the preceding claims,
**characterised in that**
the image-recording means (4) is arranged on the stator (2).

20. The optical assembly according to any one of the preceding claims,
**characterised in that**
a flexible printed-circuit-board strip (18) capable of being connected to an external control unit (26) is present, to which the image recording means (4) and the motorised adjustment element, and optionally further optical components or components (19) containing these, is connected.

21. The optical assembly according to any one of the preceding claims,
**characterised in that**
it provides a metallic housing (21)

22. A mobile telephone comprising an optical assembly according to any one of the preceding claims.

## Revendications

1. Unité optique de petite taille, plus particulièrement pour une caméra de téléphone mobile, constituée d'un stator et d'au moins trois rouleaux, et au moins un composant optique, plus particulièrement un support de lentille, moyennant quoi le composant optique (1) est logé sur le stator (2) par l'intermédiaire d'un guidage linéaire de roulement à rouleaux avec des pistes de guidage de rouleaux (A, B, C, D) réalisées sur le stator (2), moyennant quoi, au niveau du guidage linéaire de roulement à rouleaux, un élément de réglage motorisé (7, 7a, 7b) s'emboîte sur le composant optique (1), de façon à ce que le composant optique (1) puisse être déplacé par rapport au stator (2) le long d'un axe vertical sur un plan de prise de vue du moyen de prise de vue (4), **caractérisée en ce que**, sur le composant optique (1), est prévu une saillie latérale (5) sur lequel sont réalisées deux pistes de guidage (A, B) disposées en face l'une de l'autre sur le côté, moyennant quoi la saillie (5) s'emboîte dans un logement (12) réalisé sur le stator (2), avec deux pistes de guidage (C, D) disposées en face l'une de l'autre et moyennant quoi les pistes de guidage (A, B, C, D), disposées en face les unes des autres, de la saillie (5) et du logement (12) se complètent afin de former deux canaux de guidage (13), dans lesquels les éléments à rouleaux sont logés, et moyennant quoi le composant optique (1) est guidé par les au moins trois rouleaux (3).

2. Unité optique selon la revendication 1, **caractérisée en ce que** les rouleaux (3) sont logés sous précontrainte.

3. Unité optique selon la revendication 1 ou 2, **caractérisée en ce que** les pistes de guidage (C, D) du stator (2) sont conçues de manière élastique.

4. Unité optique selon la revendication 3, **caractérisée en ce que** les pistes de guidage (C, D) sont réalisées sur des sections (14) conçues de manière élastique sur le stator (2).

5. Unité optique selon la revendication 4, **caractérisée en ce que** les sections élastiques (14) sont écartées du fond du stator d'un étroit interstice (8a).

6. Unité optique selon l'une des revendications précédentes, **caractérisée en ce que**, sur une ou la saillie latérale (5) prévue sur le composant optique, plus particulièrement le support de lentille (1), une section dentée (6) est prévue, avec laquelle un pignon (8) de l'élément de réglage motorisé (7, 7a, 7b) s'engrène.

7. Unité optique selon l'une des revendications précédentes, **caractérisée en ce que** deux composants optiques ou plus, plus particulièrement deux supports de lentilles (1) ou plus et un stator (2) commun sont prévus.

8. Unité optique selon la revendication 7, **caractérisée en ce que** chaque composant optique, plus particulièrement chaque support de lentille (1) peut être déplacé individuellement par rapport au stator (2) par l'intermédiaire de son propre élément de réglage motorisé (7), ou **en ce qu'**au moins une partie des composants optiques, plus particulièrement des supports de lentilles (1) puissent être déplacés de manière couplée ou par l'intermédiaire d'un élément de réglage motorisé (7a), tandis que les autres composants optiques, plus particulièrement le ou l'autre support de lentille (1), peut être déplacé par rapport au stator (2) par l'intermédiaire de son propre élément de réglage motorisé (7b).

9. Unité optique selon la revendication 7 ou 8, **caractérisée en ce que** deux composants optiques ou plus, plus particulièrement deux supports de lentilles (1) sont prévus, dont les saillies (5) sont superposées et s'emboîtent dans un logement commun (12).

10. Unité optique selon la revendication 8, **caractérisée en ce que** deux composants optiques ou plus, plus particulièrement deux supports de lentilles (1) ou plus, sont prévus, moyennant quoi les saillies (5) des composants optiques superposés, plus particulièrement des supports de lentilles (1), sont décalés les uns par rapport aux autres d'un angle, de préférence orientés alternativement d'un côté et de l'autre avec un décalage de 180°, moyennant quoi, en fonction de la position des saillies (5), des logements (12) existent pour les saillies (5) correspondantes au niveau de côtés mutuellement opposés du stator (2).

11. Unité optique selon la revendication 10, **caractérisée en ce que** trois composants optiques, plus particulièrement trois supports de lentilles (1), sont prévus, moyennant quoi les saillies (5) des composants optiques inférieur et supérieur, plus particulièrement des supports de lentilles (1) inférieur et supérieur, sont superposées et s'emboîtent dans un logement commun (12), tandis que la saillie (5) du composant optique central, plus particulièrement du support de lentille central (1) est décalé d'un angle, plus particulièrement disposé du côté opposé et s'emboîte dans un logement (12) décalé de manière correspondante et de préférence prévu du côté opposé du stator.

12. Unité optique selon la revendication 8, **caractérisée en ce que** trois composants optiques ou plus, plus particulièrement trois supports de lentilles (1) ou plus, sont présents, moyennant quoi seuls le premier composant optique inférieur et le composant optique suivant, plus particulièrement le premier support de lentille (1) inférieur et le deuxième support de lentille (1) comprennent une saillie (5), ces saillies (5) étant positionnées de manière décalée l'une par rapport à l'autre d'un angle, de préférence 180° et disposées dans des logements (12) correspondants du stator (2), et moyennant quoi le troisième et, le cas échéant, les composants optiques suivants, plus particulièrement le troisième et, le cas échéant, les supports de lentilles (1) suivants, est couplé en mouvement avec les premiers composants optiques inférieurs ou les composants optiques suivants, plus particulièrement le premier support de lentille (1) inférieur et le deuxième support de lentille (1) suivant par l'intermédiaire d'un bras de liaison (9).

13. Unité optique selon l'une des revendications 7 à 12, **caractérisée en ce qu'**au moins un composant optique est un support de lentille (1) et au moins un composant optique est un dispositif de fermeture et/ou un diaphragme.

14. Unité optique selon la revendication 13, **caractérisée en ce que** le dispositif de fermeture et le diaphragme sont intégrés dans un composant commun (19).

15. Unité optique selon la revendication 13 ou 14, **caractérisée en ce que** le dispositif de fermeture et/ou le diaphragme ou le composant commun (19) sont disposés sur un support de lentille (1) et peuvent être déplacés avec celui-ci.

16. Unité optique selon l'une des revendications précédentes, **caractérisée en ce que** plusieurs éléments de réglage motorisés (7, 7a, 7b) peuvent être commandés par l'intermédiaire d'un dispositif de commande commun.

17. Unité optique selon l'une des revendications précédentes, **caractérisée en ce que**, sur le stator (2), un ou plusieurs éléments de fixation (1) sont prévus pour fixer l'unité optique à un objet tiers.

18. Unité optique selon la revendication 17, **caractérisée en ce que** les éléments de fixation (11) sont des assemblages vissés ou des assemblages à encliquetage ou un élément de fixation est conçu comme une surface adhésive (27).

19. Unité optique selon l'une des revendications précédentes, **caractérisée en ce que** le moyen de prise de vue (4) est disposé sur le stator (2).

20. Unité optique selon l'une des revendications précédentes, **caractérisée en ce qu'**une bande à circuit imprimé flexible (18) pouvant être reliée à un dispositif de commande externe (26) est prévu, grâce à laquelle le moyen de prise de vue (4) et l'élément de réglage motorisé et, le cas échéant, d'autres composants optiques ou des composants (19) qui les contiennent sont reliés.

21. Unité optique selon l'une des revendications précédentes, **caractérisée en ce qu'**elle comprend un boîtier métallique (21).

22. Téléphone mobile comprenant une unité optique selon l'une des revendications précédentes.
